# EUROPEAN PATENT APPLICATION

(11) **EP 2 717 533 A1**
(43) Date of publication of application: **09.04.2014**
(21) Application number: 11851817.4
(22) Date of filing: 19.07.2011
(51) Int. Cl.: H04L 29/06

(54) **METHOD, NETWORK CARD AND HARD DISK CARD FOR ACCESSING TO SHUT-DOWN HARD DISK**

(71) Applicant: Huawei Technologies Co., Ltd., Shenzhen, Guangdong 518129 (CN)
(72) Inventor: LIANG, Liang, Guangdong 518129 (CN); LIU, Yaoda, Guangdong 518129 (CN)
(74) Representative: Haley, Stephen
(86) International application number: PCT/CN2011/077317
(87) International publication number: WO 2012/083684

(57) **Abstract**

A method, a network card, and a hard disk card for accessing a shut-down hard disk are provided. The method includes: After receiving a shutdown instruction sent by a CPU, a coprocessor is powered up and takes over a network card and a secondary hard disk controller, and after completing the takeover, returns a takeover complete response to the CPU, so that the CPU continues to complete other steps of the shutdown (S101); the coprocessor creates an operation instruction according to a data operation request received by the network card from a requesting party (S102); and the coprocessor sends the operation instruction to the secondary hard disk controller, so that the secondary hard disk controller performs a read/write operation on a hard disk according to the operation instruction, and returns a result of the read/write operation to the requesting party through the network card (S103). When a computer in which a CPU is located is shut down, a coprocessor takes over management work of a network and hard disk reading and writing, and a secondary hard disk controller takes responsibility for controlling a read/write operation on a hard disk. The coprocessor has a quite simple processing function, so that at the same time when accessing of a shut-down hard disk is implemented, energy is consumed as less as possible.

## Description

### TECHNICAL FIELD

The present invention relates to the field of communications, and in particular, to a method, a network card, and a hard disk card for accessing a shut-down hard disk.

### BACKGROUND

At present, network centralized storage is a relative prevailing manner for information storage, its basic logic is to centralize storage devices in one geographic location to form a data center, and multiple terminals share these information resources through remote access.

With a concern over an environment problem in the whole world and a demand of cost control of owners of data centers, people pay more and more attention to a cost of a data center (especially power consumption of the data center). How to use fewer computing, storage, and network components on the premise that a service is ensured so as to consume the least energy has become one of directions in which the industry makes efforts. Although specific technologies are various, in general, the number of utilized components is reduced through refined management and comprehensive arrangement. To implement optimal management, optimal modularization of components of the data center is required. Only in this way, components can be arranged as fewer as possible according to a current requirement, and other components are kept in a power-saving or shutdown state.

However, the prior art has at least the following problem: With an existing computer structure, a hard disk is hidden behind an operating system, that is to say, only when the operating system is started, the hard disk can be accessed. In existing implementation, starting of the operating system requires powering up of a mainboard and running of a CPU, but merely a hard disk needs to be accessed.

### SUMMARY

Embodiments of the present invention provide a method, a network card, and a hard disk card for accessing a shut-down hard disk, so as to implement accessing of a hard disk which has already been shut down, thereby reducing power consumption of a computer in which the hard disk is located.

An embodiment of the present invention provides a method for accessing a shut-down hard disk. After receiving a shutdown instruction sent by a CPU, a coprocessor is powered up and takes over a network card and a secondary hard disk controller, and after completing the takeover, returns a takeover complete response to the CPU, so that the CPU continues to complete other steps of the shutdown.

The method includes:
creating, by the coprocessor, an operation instruction according to a data operation request received by the network card from a requesting party; and
sending, by the coprocessor, the operation instruction to the secondary hard disk controller, so that the secondary hard disk controller performs a read/write operation on a hard disk according to the operation instruction, and returns a result of the read/write operation to the requesting party through the network card.

An embodiment of the present invention further provides a network card, which includes a network interface component, a coprocessor, and a secondary hard disk controller.

The coprocessor is configured to: after receiving a shutdown instruction sent by a CPU, get powered up and take over the network interface component and the secondary hard disk controller, and after completing the takeover, return a takeover complete response to the CPU, so that the CPU continues to complete other steps of the shutdown; and creates an operation instruction according to a data operation request transferred by the network interface component, and send the operation instruction to the secondary hard disk controller.

The network interface component is configured to receive the data operation request from a requesting party and transfer the data operation request to the coprocessor; and return a result of a read/write operation of the secondary hard disk controller to the requesting party.

The secondary hard disk controller is configured to perform the read/write operation on a hard disk according to the operation instruction, and send the result of the read/write operation to the network interface component.

An embodiment of the present invention further provides a hard disk card, which includes a coprocessor and a secondary hard disk controller.

The coprocessor is configured to: after receiving a shutdown instruction sent by a CPU, get powered up and take over a network card and the secondary hard disk controller, and after completing the takeover, return a takeover complete response to the CPU, so that the CPU continues to complete other steps of the shutdown; and receive, through a mainboard bus, a data operation request transferred by the network card, creates an operation instruction according to the data operation request, and send the operation instruction to the secondary hard disk controller.

The secondary hard disk controller is configured to perform a read/write operation on a hard disk according to the operation instruction, and send a result of the read/write operation to the network card through the mainboard bus.

With the method, the network card, and the hard disk card for accessing a shut-down hard disk according to the embodiments of the present invention, accessing of a shut-down hard disk is implemented by a technical means (after receiving a shutdown instruction sent by a CPU, a coprocessor is powered up and takes over a network card and a secondary hard disk controller, and after completing the takeover, returns a takeover complete response to the CPU, so that the CPU continues to complete other steps of the shutdown; the coprocessor creates an operation instruction according to a data operation request received by the network card from a requesting party; and the coprocessor sends the operation instruction to the secondary hard disk controller, so that the secondary hard disk controller performs a read/write operation on a hard disk according to the operation instruction, and returns a result of the read/write operation to the requesting party through the network card). The coprocessor has a quite simple processing function, and consumes little energy, so that at the same time when the accessing of a shut-down hard disk is implemented, computing and network components are used as fewer as possible and energy is consumed as less as possible.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a schematic flow chart of Embodiment 1 of a method for accessing a shut-down hard disk according to an embodiment of the present invention;
FIG. 2 is a schematic structural diagram of a network card in Embodiment 2 of a method for accessing a shut-down hard disk according to an embodiment of the present invention;
FIG. 3 is a schematic structural diagram of a computer in Embodiment 2 of a method for accessing a shut-down hard disk according to an embodiment of the present invention;
FIG. 4 is a schematic flow chart of Embodiment 2 of a method for accessing a shut-down hard disk according to an embodiment of the present invention;
FIG. 5 is a schematic structural diagram of a hard disk card in Embodiment 3 of a method for accessing a shut-down hard disk according to an embodiment of the present invention;
FIG. 6 is a schematic structural diagram of a computer in Embodiment 3 of a method for accessing a shut-down hard disk according to an embodiment of the present invention;
FIG. 7 is a schematic flow chart of Embodiment 3 of a method for accessing a shut-down hard disk according to an embodiment of the present invention;
FIG. 8 is a schematic structural diagram of a network card according to an embodiment of the present invention; and
FIG. 9 is a schematic structural diagram of a hard disk card according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

### Embodiment 1

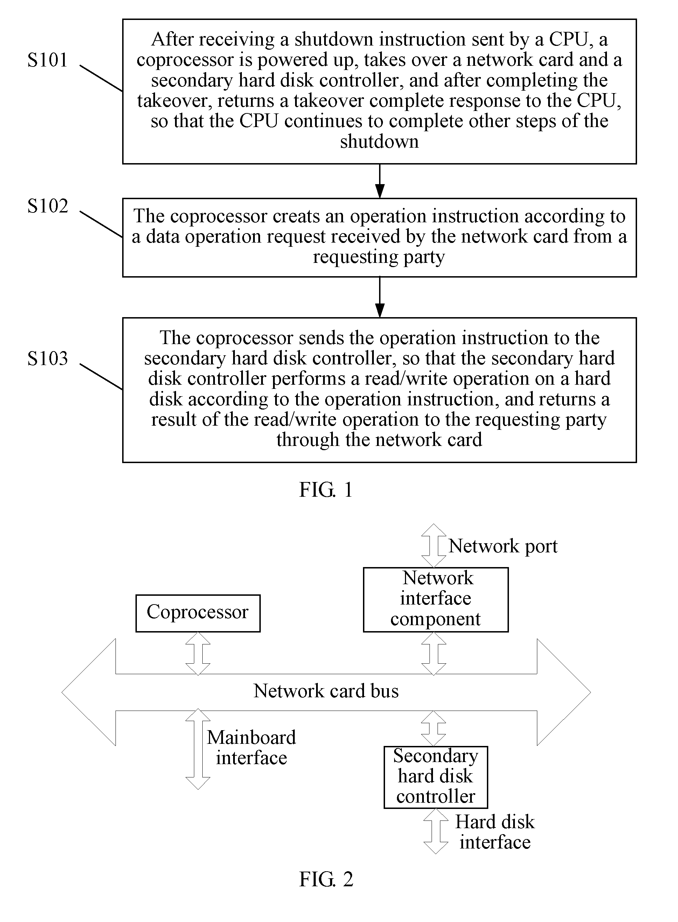

This embodiment provides a method for accessing a shut-down hard disk, as shown in FIG. 1, the method includes the following steps.

S101: After receiving a shutdown instruction sent by a CPU, a coprocessor is powered up, takes over a network card and a secondary hard disk controller, and after completing the takeover, returns a takeover complete response to the CPU, so that the CPU continues to complete other steps of the shutdown.

The coprocessor has a simple processing function, takes responsibility for interacting with the secondary hard disk controller and the network card, so as to read and transmit data of a hard disk. The coprocessor may be located on the network card, a hard disk card, or a mainboard, and consumes little energy. If the coprocessor is located on the network card, when receiving the shutdown instruction, a network card drive instructs the coprocessor to get powered up to start; if the coprocessor is located on the hard disk card, when receiving the shutdown instruction, the hard disk card instructs the coprocessor to get powered up to start; and if the coprocessor is located on the mainboard, the coprocessor is powered up to start when receiving the shutdown instruction of the CPU through a mainboard bus.

The coprocessor needs to ensure that after a computer in which the coprocessor is located is shut down, an outside read/write access operation on a hard disk resource of the computer can be normally performed, and therefore, the coprocessor needs to take over management work of the network card and the secondary hard disk controller.

The secondary hard disk controller may be located on the network card, the hard disk card, or the mainboard. An existing hard disk controller is generally located in a mainboard, and when the computer is shut down and the mainboard is powered down, the hard disk controller cannot work either. In this embodiment of the present invention, the secondary hard disk controller is configured in the network card, the hard disk card, or the mainboard to take responsibility for controlling a read/write operation on a hard disk when an operating system is shut down. When the secondary hard disk controller is located on the mainboard, the secondary hard disk controller may replace an original hard disk controller, that is, when the computer works normally, the secondary hard disk controller manages a read/write operation on the hard disk; and the secondary hard disk controller may also be independent of the original hard disk controller, and take over a task of the hard disk controller when the computer is shut down.

Before the computer is shut down, its CPU sends the shutdown instruction to each functional device (such as the network card and the hard disk controller), each functional device completes preparatory work before the shutdown and returns a preparation complete response to the CPU, and then, the CPU can continue to complete other steps of the shutdown. For the coprocessor according to this embodiment, after receiving the shutdown instruction of the CPU, the coprocessor takes over the network card and the secondary hard disk controller, and then returns the takeover complete response to the CPU, so that the CPU continues to complete other steps of the shutdown.

S102: The coprocessor creates an operation instruction according to a data operation request received by the network card from a requesting party.

The requesting party may be a remote terminal, and may also be anther terminal in the same local area network, mainly aims at accessing a hard disk, and performing a read/write operation on the hard disk. After the computer completes the shutdown, when the network card receives a data operation request from the requesting party, the network card transfers the data operation request to the coprocessor, and the coprocessor creates an operation instruction according to the data operation request.

S103: The coprocessor sends the operation instruction to the secondary hard disk controller, so that the secondary hard disk controller performs a read/write operation on the hard disk according to the operation instruction, and returns a result of the read/write operation to the requesting party through the network card.

With the method for accessing a shut-down hard disk according to this embodiment, when a computer in which a CPU is located is shut down, a coprocessor takes over management work of a network and hard disk reading and writing, and a secondary hard disk controller takes responsibility for controlling a read/write operation on a hard disk, thereby implementing accessing of a shut-down hard disk. The coprocessor has a quite simple processing function, and consumes little energy, so that at the same time when the accessing of a shut-down hard disk is implemented, computing and network components are used as fewer as possible and energy is consumed as less as possible.

### Embodiment 2

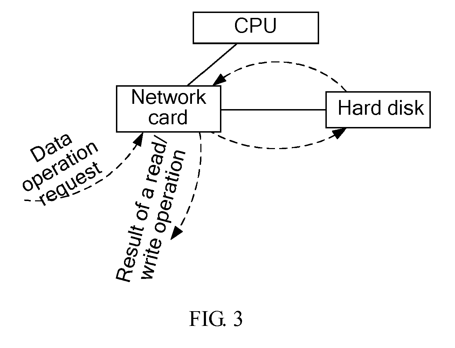

This embodiment provides a method for accessing a shut-down hard disk. In this method, a network card is improved, as shown in FIG. 2, the network card may include a network interface component, a coprocessor, and a secondary hard disk controller, and may further include a network card bus. For an architecture of a computer in which the network card is located, reference may be made to FIG. 3, where a hard disk can bypass a CPU and be directly connected to the network card.

The network card may include at least two kinds of interfaces:
a hard disk interface, configured to connect to the hard disk, such as a SATA (Serial Advanced Technology Attachment, serial advanced technology attachment) interface, where the hard disk may be a built-in hard disk inside a chassis, and may also be an external hard disk outside a chassis; and
a network port, configured to connect to a network device, such as an Ethernet interface.

The network card may further include a mainboard interface, configured to connect to a mainboard, such as a PCI-E (Peripheral Component Interconnect Express, peripheral component interconnect express) interface, and serving as a channel for interaction with another device on the mainboard before the computer is shut down.

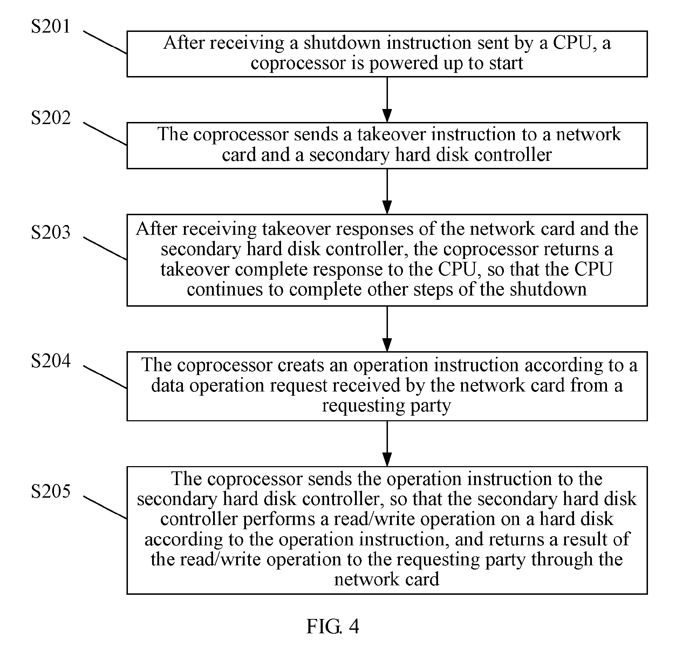

The method may include (referring to FIG. 4):
S201: After receiving a shutdown instruction sent by the CPU, the coprocessor is powered up to start.
S202: The coprocessor sends a takeover instruction to the network card and the secondary hard disk controller; because the coprocessor and the secondary hard disk controller are both located in the network card, the coprocessor actually needs to take over the network interface component and the secondary hard disk controller in the network card; and the coprocessor implements data control and transmission by interacting with the secondary hard disk controller and the network interface component.
S203: After receiving takeover responses of the network card and the secondary hard disk controller, the coprocessor returns a takeover complete response to the CPU, so that the CPU continues to complete other steps of the shutdown.
S204: The coprocessor creates an operation instruction according to a data operation request received by the network card from a requesting party.
Specifically, S204 may be that: The coprocessor acquires a data operation request received by the network interface component from the requesting party, and creates an operation instruction according to the data operation request.
S205: The coprocessor sends the operation instruction to the secondary hard disk controller, so that the secondary hard disk controller performs a read/write operation on the hard disk according to the operation instruction, and returns a result of the read/write operation to the requesting party through the network card.

The secondary hard disk controller returns the result of the read/write operation to the requesting party through the network card, which may specifically include:
sending, by the secondary hard disk controller, the result of the read/write operation to the network interface component, so that the network interface component returns the result of the read/write operation to the requesting party.

For fault tolerance, the computer is configured with more than two network cards as described in the foregoing, and then, before the computer is shut down, the CPU can select one of the network cards as a main control network card and configure the other network cards as bridge devices, so that a hard disk connected to each network card can be accessed and controlled by the main control network card.

With the method for accessing a shut-down hard disk according to this embodiment, when a computer in which a CPU is located is shut down, a coprocessor in a network card takes over management work of a network and hard disk reading and writing, and a secondary hard disk controller configured in the network card takes responsibility for controlling a read/write operation on a hard disk, thereby implementing accessing of a shut-down hard disk. The coprocessor has a quite simple processing function, and consumes little energy, so that at the same time when the accessing of a shut-down hard disk is implemented, computing and network components are used as fewer as possible and energy is consumed as less as possible.

### Embodiment 3

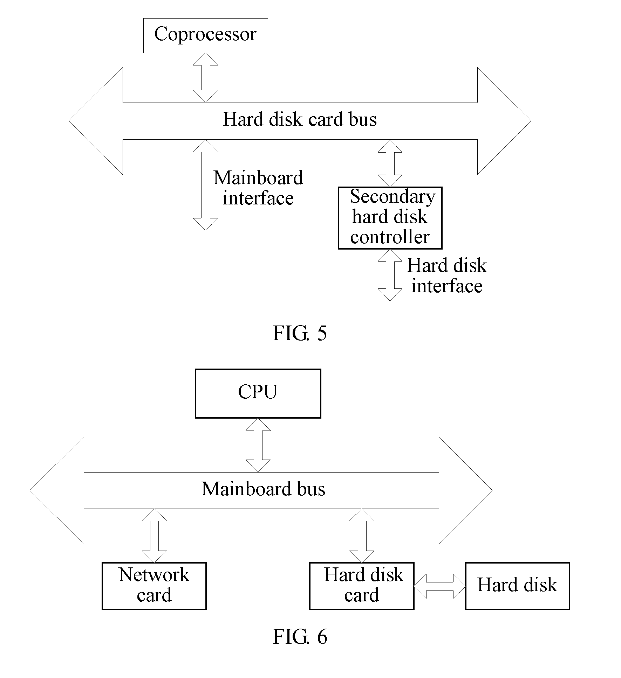

This embodiment provides a method for accessing a shut-down hard disk. In this method, a hard disk card is added on the basis of an existing computer. As shown in FIG. 5, the hard disk card may include a coprocessor and a secondary hard disk controller, and may further include a hard disk card bus. For an architecture of a computer in which the hard disk card is located, reference may be made to FIG. 6, where the hard disk card communicates with a network card through a mainboard bus.

The hard disk card may include at least two kinds of interfaces:
a hard disk interface, configured to connect to a hard disk, such as a SATA interface, where the hard disk may be a built-in hard disk inside a chassis, and may also be an external hard disk outside a chassis; and
a mainboard interface, configured to connect to a mainboard, such as a PCI-E interface, configured to connect to the mainboard bus, so that interaction with the network card is implemented.

The hard disk card may further include another mainboard interface, configured to supply power to the hard disk card through the mainboard.

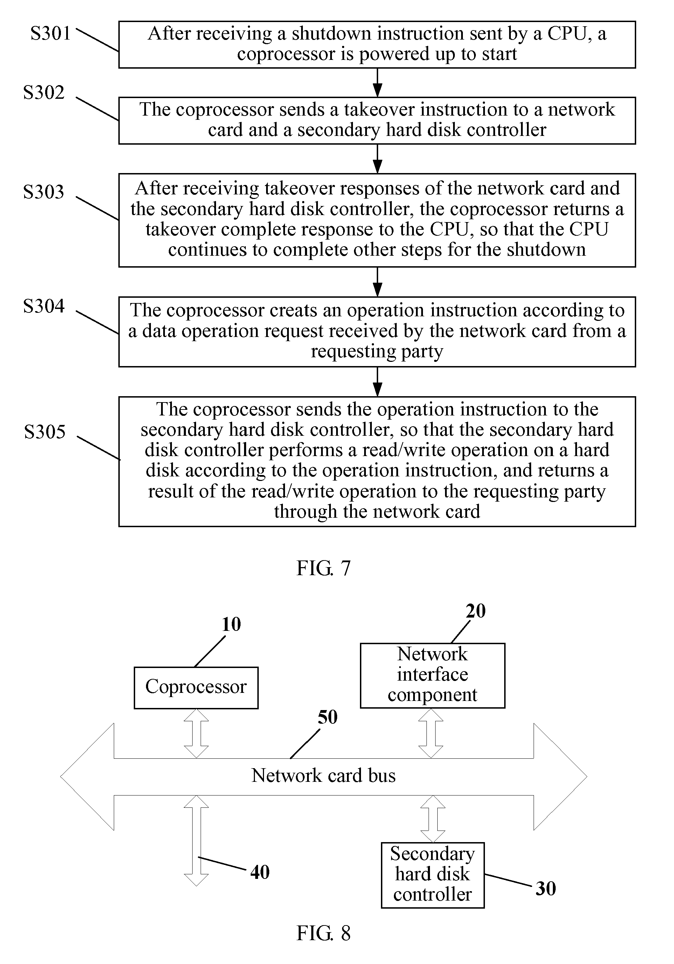

The method includes (referring to FIG. 7):
S301: After receiving a shutdown instruction sent by a CPU, the coprocessor is powered up to start.
S302: The coprocessor sends a takeover instruction to the network card and the secondary hard disk controller, where the secondary hard disk controller may manage a read/write operation on the hard disk when the computer works normally, and in this case, a hard disk controller does not need to be configured on the mainboard; and the secondary hard disk controller may also take over a task of the hard disk controller when the computer is shut down, neither of which affects implementation of this embodiment.
S303: After receiving takeover responses of the network card and the secondary hard disk controller, the coprocessor returns a takeover complete response to the CPU, so that the CPU continues to complete other steps for the shutdown.
S304: The coprocessor creates an operation instruction according to a data operation request received by the network card from a requesting party.
Specifically, S304 may be that: The coprocessor acquires, through the mainboard bus, a data operation request received by the network card from the requesting party, and creates an operation instruction according to the data operation request.
S305: The coprocessor sends the operation instruction to the secondary hard disk controller, so that the secondary hard disk controller performs a read/write operation on the hard disk according to the operation instruction, and returns a result of the read/write operation to the requesting party through the network card.

The secondary hard disk controller returns the result of the read/write operation to the requesting party through the network card, which may specifically include:
sending, by the secondary hard disk controller, the result of the read/write operation to the network card through the mainboard bus, so that the network card returns the result of the read/write operation to the requesting party.

In the method for accessing a shut-down hard disk according to this embodiment, a mainboard bus needs to be used, so that it is needed that after an operating system is shut down, the mainboard bus is not powered off. The network card used in this embodiment is an existing network card, and therefore, this embodiment has a price advantage in implementation.

With the method for accessing a shut-down hard disk according to this embodiment, when a computer in which a CPU is located is shut down, a coprocessor in a hard disk card takes over management work of a network and hard disk reading and writing, and a secondary hard disk controller configured in the hard disk card takes responsibility for controlling a read/write operation on a hard disk, thereby implementing accessing of a shut-down hard disk. The coprocessor has a quite simple processing function, and consumes little energy, so that at the same time when the accessing of a shut-down hard disk is implemented, computing and network components are used as fewer as possible and energy is consumed as less as possible.

### Embodiment 4

This embodiment provides a network card, as shown in FIG. 8, which includes a coprocessor 10, a network interface component 20, and a secondary hard disk controller 30.

The coprocessor 10 is configured to: after receiving a shutdown instruction sent by a CPU, get powered up and take over the network interface component 20 and the secondary hard disk controller 30, and after completing the takeover, return a takeover complete response to the CPU, so that the CPU continues to complete other steps for the shutdown; and create an operation instruction according to a data operation request transferred by the network interface component 20, and send the operation instruction to the secondary hard disk controller 30.

The coprocessor 10 is equipped with a small memory, which can store exchanged data packets, buffer computing results, and accommodate an operating system of the coprocessor 10.

The network interface component 20 is configured to receive the data operation request from a requesting party and transfer the data operation request to the coprocessor 10; and return a result of a read/write operation of the secondary hard disk controller 30 to the requesting party. The network interface component 20 and an existing network interface component have a similar function, and are both configured to process storage and a protocol of an I/O data packet and so on.

The secondary hard disk controller 30 is configured to perform a read/write operation on a hard disk according to the operation instruction, and send the result of the read/write operation to the network interface component 20. The secondary hard disk controller 30 has a similar function to that of an existing hard disk controller, and mainly parses the operation instruction sent by the coprocessor 30 and control the read/write operation on the hard disk.

The network card may further include a mainboard interface 40, configured to connect to a mainboard and serving as a channel for interaction with another device on the mainboard before a computer is shut down.

The network card may further include a network card bus 50, configured to connect the network interface component 20, the coprocessor 10, the secondary hard disk controller 30, and the mainboard interface 40.

With the network card according to this embodiment, when a computer in which a CPU is located is shut down, a coprocessor embedded in a network card takes over management work of a network and hard disk reading and writing, and a secondary hard disk controller configured in the network card takes responsibility for controlling a read/write operation on a hard disk, thereby implementing accessing of a shut-down hard disk. The coprocessor has a quite simple processing function, and consumes little energy, so that at the same time when the accessing of a shut-down hard disk is implemented, computing and network components are used as fewer as possible and energy is consumed as less as possible.

### Embodiment 5

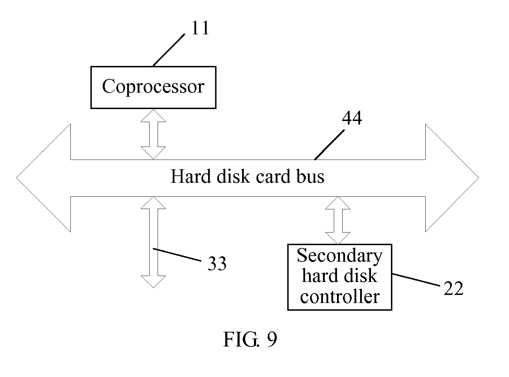

This embodiment provides a hard disk card, as shown in FIG. 9, which includes a coprocessor 11 and a secondary hard disk controller 22.

The coprocessor 11 is configured to: after receiving a shutdown instruction sent by a CPU, get powered up and take over a network card and the secondary hard disk controller 22, and after completing the takeover, return a takeover complete response to the CPU, so that the CPU continues to complete other steps for the shutdown; and receive, through a mainboard bus, a data operation request transferred by the network card, create an operation instruction according to the data operation request, and send the operation instruction to the secondary hard disk controller 22.

The coprocessor 11 is equipped with a small memory, which can store exchanged data packets, buffer computing results, and accommodate an operating system of the coprocessor 11.

The secondary hard disk controller 22 is configured to perform a read/write operation on a hard disk according to the operation instruction, and send a result of the read/write operation to the network card through the mainboard bus.

The hard disk card may further include a mainboard interface 33, configured to connect to a mainboard, serving as a channel for interaction with another device on the mainboard before a computer is shut down, and serving as a channel for interaction with the network card after the computer is shut down.

The hard disk card may further include another mainboard interface, configured to supply power to the hard disk card through the mainboard. Definitely, the hard disk card may also be supplied with power by using another external power supply.

The hard disk card may further include a hard disk card bus 44, configured to connect the coprocessor 11, the secondary hard disk controller 22, and the mainboard interface 33.

In the hard disk card according to this embodiment, a mainboard bus needs to be used, so that it is needed that after an operating system is shut down, the mainboard bus is not powered off. The network card used in this embodiment is an existing network card, and therefore, this embodiment has a price advantage in implementation.

With the hard disk card according to this embodiment, when a computer in which a CPU is located is shut down, a coprocessor embedded in the hard disk card takes over management work of a network and hard disk reading and writing, a secondary hard disk controller configured in the hard disk card takes responsibility for controlling a read/write operation on a hard disk, thereby implementing accessing of a shut-down hard disk. The coprocessor has a quite simple processing function, and consumes little energy, so that at the same time when the accessing of a shut-down hard disk is implemented, computing and network components are used as fewer as possible and energy is consumed as less as possible.

The method, the network card, and the hard disk card for accessing a shut-down hard disk are not only applicable to a centralized storage scenario such as a server of a data center, but also applicable to a similar scenario of a personal computer.

Persons skilled in the art may understand that all or a part of the steps of the methods in the foregoing embodiments may be implemented by a program instructing relevant hardware. The program may be stored in a computer readable storage medium, and the storage medium may be, for example, a ROM/RAM, a magnetic disk, or a compact disk.

It should be noted that the relational terms herein such as first and second are used only to differentiate an entity or operation from another entity or operation, and do not require or imply any actual relationship or sequence between these entities or operations. Moreover, the terms "include", "comprise", and any variation thereof are intended to cover a non-exclusive inclusion. Therefore, in the context of a process, method, object, or device that includes a series of elements, the process, method, object, or device not only includes such elements, but also includes other elements not specified expressly, or may include inherent elements of the process, method, object, or device. If no more limitations are made, an element limited by "include a/an..." does not exclude other same elements existing in the process, the method, the article, or the device which includes the element.

The foregoing descriptions are merely exemplary embodiments of the present invention, but are not intended to limit the protection scope of the present invention. Any modification, equivalent replacement, and improvement made within the spirit and principle of the present invention shall all fall within the protection scope of the present invention.

## Claims

1. A method for accessing a shut-down hard disk, wherein:
after receiving a shutdown instruction sent by a CPU, a coprocessor is powered up and takes over a network card and a secondary hard disk controller, and after completing the takeover, returns a takeover complete response to the CPU, so that the CPU continues to complete other steps for the shutdown; and
the method comprises:
creating, by the coprocessor, an operation instruction according to a data operation request received by the network card from a requesting party; and
sending, by the coprocessor, the operation instruction to the secondary hard disk controller, so that the secondary hard disk controller performs a read/write operation on a hard disk according to the operation instruction, and returns a result of the read/write operation to the requesting party through the network card.

2. The method according to claim 1, wherein when the coprocessor and the secondary hard disk controller are located in the network card, the network card further comprises a network interface component.

3. The method according to claim 2, wherein the creating, by the coprocessor, an operation instruction according to a data operation request received by the network card from a requesting party comprises:
acquiring, by the coprocessor, the data operation request received by the network interface component from the requesting party, and creating the operation instruction according to the data operation request.

4. The method according to claim 2, wherein the returning, by the secondary hard disk controller, a result of the read/write operation to the requesting party through the network card comprises:
sending, by the secondary hard disk controller, the result of the read/write operation to the network interface component, so that the network interface component returns the result of the read/write operation to the requesting party.

5. The method according to any one of claims 2 to 4, wherein a computer in which the coprocessor is located is configured with more than two network cards described in the foregoing, and before the CPU is shut down, the method further comprises: selecting, by the CPU, one of the network cards as a main control network card, and configuring the other network cards as bridge devices.

6. The method according to claim 1, wherein the coprocessor and the secondary hard disk controller are located in a hard disk card.

7. The method according to claim 6, wherein the creating, by the coprocessor, an operation instruction according to a data operation request received by the network card from a requesting party comprises:
acquiring, by the coprocessor, through a mainboard bus, the data operation request received by the network card from the requesting party, and creating the operation instruction according to the data operation request.

8. The method according to claim 6, wherein the returning, by the secondary hard disk controller, a result of the read/write operation to the requesting party through the network card comprises:
sending, by the secondary hard disk controller, the result of the read/write operation to the network card through the mainboard bus, so that the network card returns the result of the read/write operation to the requesting party.

9. A network card, comprising a network interface component, a coprocessor, and a secondary hard disk controller, wherein
the coprocessor is configured to: after receiving a shutdown instruction sent by a CPU, get powered up and take over the network interface component and the secondary hard disk controller, and after completing the takeover, return a takeover complete response to the CPU, so that the CPU continues to complete other steps for the shutdown; and create an operation instruction according to a data operation request transferred by the network interface component, and send the operation instruction to the secondary hard disk controller;
the network interface component is configured to receive the data operation request from a requesting party and transfer the data operation request to the coprocessor; and return a result of a read/write operation of the secondary hard disk controller to the requesting party; and
the secondary hard disk controller is configured to perform the read/write operation on a hard disk according to the operation instruction, and send the result of the read/write operation to the network interface component.

10. The network card according to claim 9, wherein the network card further comprises a network card bus, configured to connect the network interface component, the coprocessor, and the secondary hard disk controller.

11. A hard disk card, comprising a coprocessor and a secondary hard disk controller;
the coprocessor is configured to: after receiving a shutdown instruction sent by a CPU, get powered up and take over a network card and the secondary hard disk controller, and after completing the takeover, return a takeover complete response to the CPU, so that the CPU continues to complete other steps for the shutdown; and receive, through a mainboard bus, a data operation request transferred by the network card, create an operation instruction according to the data operation request, and send the operation instruction to the secondary hard disk controller; and
the secondary hard disk controller is configured to perform a read/write operation on a hard disk according to the operation instruction, and send a result of the read/write operation to the network card through the mainboard bus.

12. The hard disk card according to claim 11, wherein the hard disk card further comprises a hard disk card bus, configured to connect the coprocessor and the secondary hard disk controller.
